# EUROPÄISCHE PATENTSCHRIFT

(11) **EP 1 124 860 B1**
(45) Veröffentlichungstag und Bekanntmachung des Hinweises auf die Patenterteilung: **26.11.2003**
(21) Anmeldenummer: 99948840.6
(22) Anmeldetag: 23.09.1999
(51) Int. Cl.: C08F 4/655, C08F 10/00

(54) **VERFAHREN ZUR HERSTELLUNG EINES POLYMERS**
METHOD FOR PRODUCING A POLYMER
PROCEDE DE PRODUCTION D'UN POLYMERE

(30) Priorität: 25.09.1998 DE 19843858
(43) Veröffentlichungstag der Anmeldung: 22.08.2001
(73) Patentinhaber: Ticona GmbH, 65451 Kelsterbach (DE)
(72) Erfinder: EHLERS, Jens, D-46499 Hamminkeln (DE); HAFTKA, Stanislaw, D-46485 Wesel (DE); WANG, Louis, Missouri City, TX 77459 (US)
(86) Internationale Anmeldenummer: EP9907085
(87) Internationale Veröffentlichungsnummer: WO00018809

(56) Entgegenhaltungen:
- EP-A- 0 485 006
- FR-A- 2 202 107
- GB-A- 2 028 844

## Beschreibung

Die vorliegende Erfindung betrifft ein Verfahren zur Herstellung eines Katalysators ein neues Polymer sowie ein Verfahren zur Herstellung des Polymers.

Bei der Verarbeitung wird Polyethylen meist aufgeschmolzen und zu einem kompakten Formkörper geformt. Aus wirtschaftlicher Sicht ist hierbei stets die Verwendung eines möglichst kompakten Polymers wünschenswert. Deutlich wird dieses Ziel insbesondere bei der Herstellung und Verwendung von ultrahochmolekularem Polyethylen. Dies wird im Stand der Technik in JP-A-07041514, JP-A-06179720, EP-A-574153, JP-A-05070519 beschrieben.

Füllstoffe werden überwiegend in der Schmelze des Polymeren homogen verteilt. Ist dies aus verarbeitungstechnischer Sicht unmöglich, so bietet sich die Verwendung von Polymer mit irregulärer Struktur an. Als physikalisch leicht zugängliches Maß für die Korn- und Pulvermorphologie kann dabei die Schüttdichte des Polymeren herangezogen werden. So wird in JP-A-59120423 die Verwendung von mit Graphit gefülltern UHMW-PE beschrieben. Vorteilhaft ist hier die Verwendung von UHMW-PE mit einer Schüttdichte von weniger als 0.25 g/ccm.

Bekannt ist zudem die Verarbeitung von UHMW-PE unter geringem Druck zu porösen Halb- und Fertigzeugen. Für die Anwendung von Filterelementen ist ein geringer Druckverlust erforderlich. Auch hier ist eine irreguläre Struktur des Sinterwerkstoffs UHMW-PE sehr hilfreich; vgl. JP-A-09003236, JP-A-09001633.

Bei der Herstellung von Filterelementen treten beide Anforderungen gepaart auf. Aus EP-A-0 554 223 ist ein Verfahren zur Herstellung einer Filtereinheit bekannt. Die Morphologie und niedrige Schüttdichte des Binders und der Aktivkohle sind aufeinander abgestimmt. Durch die hohe Viskosität des Binders ist eine geringere Festigkeit der erhaltenen Filtereinheit gegeben.

Aus US-A-4,753,728 ist ein Aktivkohle-Filterblock bekannt, der AktivkohlePartikeln enthält, die durch ein Polymer zu einem Filterblock gebunden sind. Das Polymer weist einen Schmelzindex von weniger als etwa 1 gram pro 10 Minuten auf, bestimmt durch ASTM D 1238 bei 190 °C und 15 Kilogramm Ladung. Das Polymer wird bei erhöhter Temperatur klebrig. Das Polymer wird nicht genügend flüssig, um im wesentlichen die Aktivkohle-Partikel zu befeuchten. Es wird ein kommerziell erhältliches Polymer GUR® 212 offenbart, das einen Schmelzindex von weniger als <0.1 gram pro 10 Minuten aufweist, bestimmt durch ASTM D 1238 bei 190 °C und 15 Kilogramm Ladung und ein ultrahoch molekulares Polyethylen ist.

Aus EP-A-0 792 673 ist ein Binder zur Herstellung von Filtern nach der Extrusionstechnik bekannt. Der Binder hat eine sehr hohe Fließfähigkeit und weist eine inhomogene Verteilung auf. Die inhomogene Verteilung im Gemisch führt zu einem brüchigen Produkt. Daneben kommt es zur der Oberfläche der Aktivkohle durch den Binder. Die Folge ist eine Abnahme der Filterkapazität.

Neben der Molmasse und der Morphologie ist zudem die Korngröße des Polymeren auf den Füllstoff abzustimmen, um eine homogene Mischung zu ermöglichen und Entmischungen während der Verarbeitung der pulverförmigen Mischungen zu vermindern.

Die bisher bekannten Verfahren zur Herstellung von Polyethylen erlauben nur in sehr engen Grenzen eine Beeinflussung der äußeren Gestalt der Polymerpartikel. Üblicherweise wird die mittlere Katalysatorkorngröße bei der Herstellung desselben festgelegt. Bekanntlich kann die Katalysatorkorngröße durch Scherung bei und nach der Herstellung des festen Katatysatorkorns durch chemische Reaktion der Einzelkomponenten gezielt beeinflußt werden. Üblicherweise sinkt die Korngröße bei höherer Scherung. Bei technisch bedingt gegebener Umfangsgeschwindigkeit des Rührers kann die Scherung durch Variation der Lösungsmittelviskosität gesteuert werden. Ist zudem das Lösungsmittel gegeben, so kann dessen Viskosität durch die Temperatur beeinflußt werden. Bei abnehmender Temperatur nimmt die Scherung aufgrund der höheren Viskosität des Lösungsmittels in der Regel zu. Es resultieren Katalysatoren mit geringer Korngröße. So wird der in EP-A-0645403 beschriebene Katalysator bei einer niedrigen Temperatur hergestellt, um einen feinkörnigen Katalysator zu erhalten. Auch die Verwendung höhervikoser Lösemittel bei der Katalysatorherstellung führt zu einem analogen Resultat.

Die Aufgabe der vorliegenden Erfindung besteht darin, ein wirtschaftliches und umweltschonendes Verfahren zur Herstellung eines Homo- und/oder Copolymers mit irregulärer Partikelstruktur bereitzustellen.

Die vorliegende Aufgabe wird gelöst durch ein Verfahren zur Herstellung eines Homo- und/oder Copolymers mit irregulärer Partikelstruktur, wobei die Monomeren in Gegenwart eines aus einer Titankomponente und einer organischen Aluminiumverbindung bestehenden Mischkatalystors und eines Molmassenreglers polymerisiert werden.

Durch das erfindungsgemäße Verfahren wird bevorzugt ein Polyethylen mit einer viskosimetrisch gemessenen Molmasse von 1,5 - 4,1 x 10⁵g/mol (nach Margolies M=5,37 x 10⁴ [IV]^{1,49}), einer Schüttdichte von weniger als 0,4g/ccm, insbesondere 0,05 g/ccm bis 0,4 g/ccm sowie einer mittleren Korngröße von 5 - 300 µm und einer Molmassenverteilung Mw/Mn von 3 - 30 erhalten oder bevorzugt ein Polyethylen Homo- und/oder Copolymer mit einem Schmelzindex (MFR 190/15) von 1,3 g/10 min bis 10 g/10 min, einer Molekulargewichtsver-teilung Mw/Mn von 3 bis 30, einer Schüttdichte von 0,05 g/cc bis 0,4 g/cc und einer Korngröße von 5 µm bis 300 µm erhalten. Besonders bevorzugt wird ein Polyethylen Homound/oder Copolymer mit einem Schmelzindex (MFR 190/15) von 1,3 g/10 min bis 10 g/10 min, einer Molekulargewichtsverteilung Mw/Mn von 3 bis 10, einer Schüttdichte von 0,1 g/cc bis 0,4 g/cc und einer Korngröße von 20 µm bis 200 µm oder ein Polyethylen Homo- und/oder Copolymer mit einem Schmelzindex (MFR 190/15) von 1,4 g/10 min bis 5 g/10 min, einer Molekulargewichtsverteilung Mw/Mn von 4 bis 8, einer Schüttdichte von 0,13 g/cc bis 0,3 g/cc und einer Korngröße von 60 µm bis 180 µm erhalten. Ganz besonders bevorzugt wird ein Polyethylen Homo- und/oder Copolymer mit einem Schmelzindex (MFR 190/15) von 1,4 g/10 min bis 3 g/10 min, einer Molekulargewichtsverteilung Mw/Mn von 4 bis 8, einerSchüttdichte von 0,15 g/cc bis 0,28 g/cc und einer Korngröße von 60 µm bis 160 µm erhalten.

Das erfindungsgemäße Verfahren ermöglicht es bevorzugt pulverförmiges Polyethyen mit variablen einstellbaren Korngrößen herzustellen. Die Molmasse des Polymeren sollte so eingestellt werden, daß ein Material mit meßbarer Fließfähigkeit erhalten wird. Gleichzeit wird durch eine enge Molmassenverteilungsbreite sichergestellt, daß bei der Filterherstellung die Poren der Aktivkohle beim Sintern nicht verschmiert werden. Durch eine ausreichende Rieselfähigkeit soll ferner ein gutes Trocknungs- sowie Förderverhalten sichergestellt sein.

Zudem wird eine Variation der Polymermorpholgie möglich. Dies kann durch die gewählte Polymerisationstemperatur aber auch durch den Ethylenpartialdruck erfolgen. Sowohl eine höhere Temperatur, als auch ein höherer Ethylenpartialdruck bei der Polymerisation bewirken einen Anstieg der Schüttdichte.

Die erfindungsgemäße Titankomponente wird in einer Eintopfreaktion erhalten. Die verdünnte Ti(IV)-Verbindung wird mit der verdünnten Aluminiumverbindung bei - 40 °C bis 100°C im Molverhältnis von 1 : 0,01 bis 1 : 4 innerhalb von 0,5 min bis 60 min umgesetzt.

Erfindungsgemäß wird die Korngröße des Katalysators durch die Formiertemperatur des Katalysators determiniert. Hierdurch kann die Korngröße des Polymeren beeinflußt werden, die auf Basis des auf das Multigrainverhalten zurückgehende Replikationsverhaltens mit der Korngröße des Katalysatorfeststoffs korreliert.

Die Reaktion der Ti(IV)-Verbindung mit der organischen Aluminumverbindung erfolgt in einem reinen gesättigten Kohlenwasserstoff oder einer Mischung gesättigter Kohlenwasserstoffe bei Temperaturen von - 40 °C bis 100 °C, vorzugsweise - 20 °C und 50 °C, besonders bevorzugt zwischen 0 °C und 30 °C. Die Konzentrationen der Reaktanden in den Ausgangslösungen betragen 0,1 mol bis 9,1 mol Ti(IV)-Verbindung/l Lösungsmittel und 0,01 mol bis 1 mol Al-Verbindung/l, insbesondere 0,2 mol bis 5 mol Ti(IV)-Verbindung und 0,02 mol bis 0,2 mol Al-Verbindung.

Zur Umsetzung der Komponenten wird die Ti(IV)-Komponente zu der Al-Komponente gegeben. Die Dosierzeit beträgt 0,1 min bis 60 min, vorzugsweise 1 min bis 30 min. In Abhängigkeit von der Temperatur ist die Umsetzung nach 1 min bis 600 min beendet. Cerimetrisch beträgt die Ti(III)-Ausbeute mindestens 95%.

Die Polymerisation wird in Suspension in einer oder mehreren Stufen, kontinuierlich oder diskontinuierlich durchgeführt. Die Polymerisationstemperatur beträgt 30 °C bis 130 °C, vorzugsweise 50 °C bis 90 °C. Entsprechend den Anforderungen an die Schüttdichte des Polymeren wird der Ethlyenpartialdruck eingestellt Er beträgt weniger als 4 Mpa, und zwar 0,05 Mpa bis 4 Mpa, bevorzugt 0,02 Mpa bis 2 Mpa, besonders bevorzugt 0,04 Mpa bis 1 Mpa. Wie bei Ziegler-Natta Polymerisationen üblich, wird als Kokatalysator eine Aluminiumorganische Verbindung verwendet. Die Aluminiumkomponente wird dem Suspensionsmittel in Relation zur Ti-Komponente im Verhältnis Al:Ti von 1 : 1 bis 30 : 1 zugefügt. Das bevorzugte Verhältnis Al:Ti beträgt von 2 : 1 bis 20 : 1.

Das Reaktionsmedium für die Polymerisation ist wie bei Ziegler-Natta-Polymerisationen üblich ein inertes Lösungsmittel, wie Butan, Pentan, Hexan, Cyclohexan, Nonan, Decan sowie deren höhere Homologen und isomere als reine Substanz oder deren Mischungen. Das Lösungsmittel wird vor Verwendung von Katalysator-Giften, wie Sauerstoff, Feuchtigkeit oder Schwefelverbindungen befreit.

Die Molmassen der Polymerisate lassen sich in bekannter Weise durch die Zufuhr entsprechender Komponenten einstellen. Bevorzugt ist die Verwendung von Wasserstoff. Das Verhältnis von Ethylenpartialdruck zu Wasserstoffpartialdruck beträgt von 0,5 : 1 bis 10 : 1, vorzugsweise 2 : 1 bis 8 : 1.

Durch Zusatz von 1-Olefinen können wie bekannt neben Ethylenhomopolymeren auch entsprechende Copolymere erhalten werden.

Das Polymer wird unter inertgas vom Suspensionsmittel abgetrennt und im Wirbelbett getrocknet. Bei Verwendung hochsiedender Kohlenwasserstoffe wird das Reaktionsprodukt zuvor einer Wasserdampfbehandlung unterzogen.

Das Suspensionsmittel wird direkt in den Polymerisationsreaktor zurückgeführt.

Dem Polymer können Additive zur Stabilisierung, wie die üblichen Salze langkettiger Fettsäuren, wie Calcium-, Zink- oder Magnesiumstearat zugesetzt werden.

Zur Beschreibung der Polymerisate werden die nachstehenden Werte angegeben:
mittlerer Korndurchmesser (d50): bestimmt durch Laserbeugung mit dem Korngrößenanalysator Helos-Rhodos Meß und Auswertesystem der Fa. Sympatec GmbH, optische Konzentration 4-7%,
Schüttdichte (SD): bestimmt nach DIN 53 466,
Schmelzindex (MFR): Der Schmelzindex 190/15 wurde nach ISO 1133 bestimmt. Als Stabilisator wurden 0,2% Ionol zugestzt,
Viskositätszahl (VN): Die Bestimmung erfolgte nach ISO 1628-3 in Dekalin bei einer Konzentration von 0,1 g/dl. Zur Berechung der Molmasse wird hieraus die Grenzviskosität (IV) nach der Martin-Gleichung berechnet.
B-Wert: Dieser Wert gibt als dimensionslose Größe Aufschluß über die Korngröße des Katalysators. Auf Basis des Replikationseffektes gilt folgender Zusammenhang: log(Katalysatorausbeute) = 3xlog(d50) - B. Je kleiner der B-Wert desto feinkörniger ist der mittlere Korndurchmesser des Katalysators.

Die Erfindung wird anhand von Beispielen näher erläutert:

### Beispiele

### Katalysatorherstellung

In einem 600 l-Behälter wurden unter Schutzgasüberlagerung 13 mol Isoprenylaluminium (IPPA) und 252 l Exxsol vorgelegt. Bei einer AnfangsTemperatur von 8 °C - 13 °C wurde eine Lösung von Titantetrachlorid in Exxsol® D30 (Konzentration 3000 mmol/l) unter Rühren zudosiert, so daß sich in der Reaktionsmischung ein Verhältnis Ti: IPRA von 1 : 0,78 einstellte. Die Dosierzeit betrug 120 sec -140 sec. Dia Reaktion verlief exotherm und spontan. Die Temperatur stiegt innerhalb von 4 min rasch um 5 °C an. Zur Nachreaktion wurde unter Kühlung 2 Stunden geführt. Nach 15 Stunden wurde die obere Phase abdekantiert. Der Feststoff wurde mit 200 l Exxsol® D30 und 0,7 mol IPRA versetzt und zur Polymerisation eingesetzt.

### Polymerisation

Die Polymerisation wurde in einer kontinuierlich betriebenen Anlage einstufig unter Rückführung des Suspensionsmediums durchgeführt. Als Suspensionsmittel diente eine Mischung gesättigter Kohlenwasserstoffe im Siedebereich von 140 °C - 170 °C (Exxsol® D30), die zuvor über Molekularsiebe und Aluminiumoxid gereinigt wurden. Die Polymerisation wurde in einem 40 l Reaktor bei einer Reaktionstemperatur von 70 °C - 82 °C und einem Ethylenpartialdruck von 0.16 Mpa bis 0.27 Mpa durchgeführt.

Erfahrungsgemäß steigt bei einem Scale-up die Polymerschüttdichte um ca. 0.02 bis 0.05 g/l an.

Die Beispiele 5 und 6 wurden wie die Beispiele 1 bis 4 durchgeführt. Bei den Beispielen 5 und 6 wurde der Katalysatoreinsatz von 0.95 mMolTi/kgPE auf die Hälfte abgesenkt. Um die geforderten Produkteigenschaften einhalten zu können, wurde sowohl die Reaktionstemperatur, als auch der Ethylenpartialdruck gegenüber den Beispielen 1 bis 4 erhöht

Die Parameter und Meßergebnisse sind in der nachstehend aufgeführten Tabelle dargestellt.

**Tabelle**

| Formier-temp. des Katalysators | Poly-temp. | p(C₂H₄) | C₂H₄/H₂ | MFR 190/15 | SD - | d(50) | B-Wert | Beispiel |
|---|---|---|---|---|---|---|---|---|
| [°C] | [°C] | [bar] | | [g/10min] | [g/l] | [µm] | | |
| 9 | 70 | 2.20 | 2.04 | 1.6 | 163 | 97 | 3.52 | 1 |
| 10 | 70 | 1.65 | 1.92 | 1.9 | 161 | 145 | 3.47 | 2 |
| 11 | 70 | 1,65 | 2.04 | 1.6 | 171 | 97 | 2.94 | 3 |
| 12 | 70 | 1.68 | 2.23 | 1.8 | 187 | 84 | 2.80 | 4 |
| 10 | 82 | 2.7 | n.b. | 1.4 | 190 | 172 | 3.41 | 5 |
| 13 | 80 | 2.4 | n.b. | 1.4 | 230 | 85 | 2.42 | 6 |

## Patentansprüche

1. Verfahren zur Herstellung eines Polyethylen Homo- und/oder Copolymers mit irregulärer Partikeistruktur mit
| | |
|---|---|
| Schmelzindex (MFR 190/15) | von 1,3 g/10 min bis 10 g/10 min, |
| Molekulargewichtsverteilung Mw/Mn | von 3 bis 30, |
| Schüttdichte | von 0,05 g/cc bis 0,4 g/cc und |
| | |
| Korngröße | 5 µm bis 300 µm, durch |
Polymerisation der Monomeren mit einem Mischkatalysator, der hergestellt wird, in dem eine Ti(IV)-Verbindung mit einer organischen Aluminiumverbindung bei-20 °C bis 50°C in einem Suspensionsmittel innerhalb von 0,5 min bis 60 min umgesetzt wird.

2. Verfahren zur Herstellung eines Homo- und/oder Copolymers mit irregulärer Partikelstruktur nach Anspruch 1 mit
| | |
|---|---|
| Schmelzindex (MFR 190/15) | von 1,3 g/10 min bis 10 g/10 min, |
| Molekulargewichtsverteilung Mw/Mn | von 3 bis 10, |
| Schüttdichte | von 0,1 g/cc bis 0,4 g/cc und |
| Korngröße | 20 µm bis 200 µm. |

3. Verfahren zur Herstellung eines Homo- und/oder Copolymers mit irregulärer Partikelstruktur nach Anspruch 1 oder 2 mit
| | |
|---|---|
| Schmelzindex (MFR 190/15) | von 1,4 g/10 min bis 5 g/10 min, |
| Molekulargewichtsverteilung Mw/Mn | von 4 bis 8, |
| Schüttdichte | von 0,13 g/cc bis 0,3 g/cc und |
| Korngröße | 60 µm bis 180 µm. |

4. Verfahren zur Herstellung eines Homo- und/oder Copolymers mit irregulärer Partikelstruktur nach einem oder mehreren der Ansprüche 1 bis 3 mit
| | |
|---|---|
| Schmelzindex (MFR 190/15) | von 1,4 g/10 min bis 3 g/10 min, |
| Molekulargewichtsverteilung Mw/Mn | von 4 bis 8, |
| Schüttdichte | von 0,15 g/cc bis 0,28 g/cc und |
| Korngröße | 60 µm bis 160 µm. |

5. Verfahren zur Herstellung eines Homo- und/oder Copolymers mit irregulärer Partikelstruktur nach einem oder mehreren der Ansprüche 1 bis 4, wobei die Polymerisation bei einer Temperatur von 30 °C bis 130 °C und einem Druck von 0,05 Mpa bis 4 Mpa durchgeführt wird.

6. Verfahren zur Herstellung eines Homo- und/oder Copolymers mit irregulärer Partikelstruktur nach einem oder mehreren der Ansprüche 1 bis 5, wobei die Polymerisation bei einer Temperatur von 50 °C bis 90 °C durchgeführt wird.

7. Verfahren zur Herstellung eines Polyethylen Homo- und/oder Copolymers mit irregulärer Partikelstruktur nach einem oder mehreren der Ansprüche 1 bis 6, wobei bei der Herstellung des Mischkatalysators die Konzentrationen der Reaktanden in den Ausgangslösungen 0,1 mol bis 9,1 mol Ti(IV)-Verbindung/l Lösungsmittel und 0,01 mol bis 1 mol Al-Verbindung/l betragen.

## Claims

1. A process for preparing a homopolymer and/or copolymer having an irregular particle structure and
| | |
|---|---|
| a melt flow index (MFR 190/15) | of from 1.3 g/10 min to 10 g/10 min, |
| a molecular weight distribution M_{w}/Mₙ | of from 3 to 30, |
| a bulk density | of from 0.05 g/cc to 0.4 g/cc and |
| a particle size | of from 5 µm to 300 µm, |
by polymerization of the monomers using a mixed catalyst prepared by reacting a Ti(IV) compound with an organic aluminum compound at from -20°C to 50°C in a suspension medium for from 0.5 minute to 60 minutes.

2. The process for preparing a homopolymer and/or copolymer having an irregular particle structure as claimed in claim 1, wherein
| | |
|---|---|
| the melt flow index (MFR 190/15) | is from 1.3 g/10 min to 10 g/10 min, |
| the molecular weight distribution M_{w}/Mₙ | is from 3 to 10, |
| the bulk density | is from 0.1 g/cc to 0.4 g/cc and |
| the particle size | is from 20 µm to 200 µm. |

3. The process for preparing a homopolymer and/or copolymer having an irregular particle structure as claimed in claim 1 or 2, wherein
| | |
|---|---|
| the melt flow index (MFR 190/15) | is from 1.4 g/10 min to 5 g/10 min, |
| the molecular weight distribution M_{w}/Mₙ | is from 4 to 8, |
| the bulk density | is from 0.13 g/cc to 0.3 g/cc and |
| the particle size | is from 60 µm to 180 µm. |

4. The process for preparing a homopolymer and/or copolymer having an irregular particle structure as claimed in one or more of claims 1 to 3, wherein
| | |
|---|---|
| the melt flow index (MFR 190/15) | is from 1.4 g/10 min to 3 g/10 min, |
| the molecular weight distribution M_{w}/Mₙ | is from 4 to 8, |
| the bulk density | is from 0.15 g/cc to 0.28 g/cc and |
| the particle size | is from 60 µm to 160 µm. |

5. The process for preparing a homopolymer and/or copolymer having an irregular particle structure as claimed in one or more of claims 1 to 4, wherein the polymerization is carried out at a temperature of from 30°C to 130°C and a pressure of from 0.05 MPa to 4 MPa.

6. The process for preparing a homopolymer and/or copolymer having an irregular particle structure as claimed in one or more of claims 1 to 5, wherein the polymerization is carried out at a temperature of from 50°C to 90°C.

7. The process for preparing an ethylene homopolymer and/or copolymer having an irregular particle structure as claimed in one or more of claims 1 to 6, wherein the concentrations of the reactants in the starting solutions in the preparation of the mixed catalyst are from 0.1 mol to 9.1 mol of Ti(IV) compound/l of solvent and from 0.01 mol to 1 mol of Al compound/l.

## Revendications

1. Procédé pour la préparation d'un homo- et/ou copolymère polyéthylène à structure particulaire irrégulière et à
| | |
|---|---|
| indice de fluidité à chaud (MFR 190/15) | de 1,3 g/10 min à 10 g/10 min, |
| distribution de masse moléculaire Mw/Mn | de 3 à 30, |
| densité apparente | de 0,05 g/cm³ à 0,4 g/cm³ et |
| taille de grain | de 5 µm à 300 µm, par |
polymérisation des monomères avec un catalyseur mixte qui est préparé en faisant réagir un composé contenant du Ti-(IV) avec un composé organique contenant de l'aluminium, à une température de -20°C à 50°C dans un agent de mise en suspension, en l'espace de 0,5 minute à 60 minutes.

2. Procédé pour la préparation d'un homo- et/ou copolymère à structure particulaire irrégulière selon la revendication 1, à
| | |
|---|---|
| indice de fluidité à chaud (MFR 190/15) | de 1,3 g/10 min à 10 g/10 min, |
| distribution de masse moléculaire Mw/Mn | de 3 à 10, |
| densité apparente | de 0,1 g/cm³ à 0,4 g/cm³ et |
| taille de grain | de 20 µm à 200 µm. |

3. Procédé pour la préparation d'un homo- et/ou copolymère à structure particulaire irrégulière selon la revendication 1 ou 2, à
| | |
|---|---|
| indice de fluidité à chaud (MFR 190/15) | de 1,4 g/10 min à 5 g/10 min, |
| distribution de masse moléculaire Mw/Mn | de 4 à 8, |
| densité apparente | de 0,13 g/cm³ à 0,3 g/cm³ et |
| taille de grain | de 60 µm à 180 µm. |

4. Procédé pour la préparation d'un homo- et/ou copolymère à structure particulaire irrégulière selon une ou plusieurs des revendications 1 à 3, à
| | |
|---|---|
| indice de fluidité à chaud (MFR 190/15) | de 1,4 g/10 min à 3 g/10 min, |
| distribution de masse moléculaire Mw/Mn | de 4 à 8, |
| densité apparente | de 0,15 g/cm³ à 0,28 g/cm³ et |
| taille de grain | de 60 µm à 160 µm. |

5. Procédé pour la préparation d'un homo- et/ou copolymère à structure particulaire irrégulière selon une ou plusieurs des revendications 1 à 4, dans lequel la polymérisation est effectuée à une température de 30°C à 130°C et sous une pression de 0,05 MPa à 4 MPa.

6. Procédé pour la préparation d'un homo- et/ou copolymère à structure particulaire irrégulière selon une ou plusieurs des revendications 1 à 5, dans lequel la polymérisation est effectuée à une température de 50°C à 90°C.

7. Procédé pour la préparation d'un homo- et/ou copolymère polyéthylène à structure particulaire irrégulière selon une ou plusieurs des revendications 1 à 6, dans lequel, dans la préparation du catalyseur mixte les concentrations des partenaires réactionnels dans les solutions de départ vont de 0,1 mole à 9,1 moles de composé contenant du Ti-(IV)/l de solvant et de 0,01 mole à 1 mole de composé contenant de l'Al/l.
